# EUROPEAN PATENT APPLICATION

(11) **EP 4 760 493 A1**
(43) Date of publication of application: **17.06.2026**
(21) Application number: 25214923.2
(22) Date of filing: 11.11.2025
(51) Int. Cl.: G06F 9/30

(54) **CONSERVING INSTRUCTION ENCODING SPACE AND MINIMIZING CODE SIZE FOR MEMORY OPERATIONS USING PREFIX BITS TO DISTINGUISH LOAD AND STORE TAG CHECKS**

(30) Priority: 11.12.2024 US 202418977277
(71) Applicant: INTEL Corporation, Santa Clara, CA 95054 (US)
(72) Inventor: LeMay, Michael, Hillsboro, 97123 (US); Nuzman, Joseph, 34381 Haifa (IL); Durham, David M., Beaverton, 97007 (US); Cihula, Joseph, Hillsboro, 97124 (US); Brandt, Jason W., Austin, 78746 (US); Anati, Ittai, 4723939 Ramat Hasharon (IL)
(74) Representative: Goddar, Heinz J.

(57) **Abstract**

Techniques for using prefix bits to distinguish between loads and stores are described. An embodiment includes instruction decoder and execution circuitry. The instruction decoder circuitry is to decode an extended instruction set including a first and a second instruction. The first and second instructions have a format including an opcode field and a prefix field, and both have a first opcode value, corresponding to a NOP in a non-extended instruction set, in the opcode field. In the prefix field, the first instruction has a first prefix value and the second instruction has a second prefix value in the prefix field. The execution circuitry is to perform a first one or more operations related to the first instruction and a second one or more operations related to the second instruction, the first one or more operations including a load operation and the second one or more operations including a store operation.

## Description

### BACKGROUND

A processor in an information processing system may execute software programs based on a limited set of instructions available to be executed by the processor, defined by the instruction set architecture (ISA) of the processor. Instructions within an ISA may be referred to as macro-instructions, in contrast with an instruction (e.g., a micro-instruction) or operation (e.g., a micro-operation or uop) that results from the processor's decoding of macro-instructions.

An existing (or non-extended) ISA may be extended with new instructions for a new generation of a processor, to support new features, etc., to create an extended ISA (e.g., including instructions from the existing ISA plus the new instructions) that is backward compatible with the existing ISA. To accommodate this possibility, an existing ISA may have been defined to include one or more opcodes that are not executed by processors designed to support the existing ISA but not the extended ISA. Within the existing ISA, these opcodes and/or corresponding instructions may be referred to as no-operation instructions or no-ops (NOPs) because no operation is performed in response to decoding of these opcodes by such a processor. However, one or more NOPs may be redefined within the extended ISA as new instructions that will be executed by processors designed to support the extended ISA.

### BRIEF DESCRIPTION OF DRAWINGS

Various examples in accordance with the present disclosure will be described with reference to the drawings, in which:
FIG. 1A shows example encodings for fourteen new instructions according to embodiments.
FIG. 1B illustrates a method for using prefix bits to distinguish between loads and stores according to embodiments.
FIG. 2 illustrates a block diagram according to embodiments, including an enhanced compiler to instrument source code with explicit instructions to check memory accesses.
FIG. 3A illustrates a memory tag checking enable circuit according to embodiments.
FIG. 3B illustrates an example of decision logic, in a processor front-end, for enabling memory tag checks according to embodiments.
FIG. 4 illustrates an example computing system according to an embodiment.
FIG. 5 illustrates a block diagram of an example processor and/or System on a Chip (SoC) that may have one or more cores and an integrated memory controller according to an embodiment.
FIG. 6A is a block diagram illustrating both an example in-order pipeline and an example register renaming, out-of-order issue/execution pipeline according to an embodiment.
FIG. 6B is a block diagram illustrating both an example in-order architecture core and an example register renaming, out-of-order issue/execution architecture core to be included in a processor according to an embodiment.
FIG. 7 illustrates examples of execution unit(s) circuitry according to an embodiment.
FIG. 8 illustrates the use of a software instruction converter to convert binary instructions in a source instruction set architecture to binary instructions in a target instruction set architecture according to an embodiment.

### DETAILED DESCRIPTION

The present disclosure relates to methods, apparatus, systems, and non-transitory computer-readable storage media for using prefix bits to distinguish between loads and stores. According to some examples, an apparatus includes instruction decoder and execution circuitry. The instruction decoder circuitry is to decode an extended instruction set including a first and a second instruction. The first and second instructions have a format including an opcode field and a prefix field, and both have a first opcode value, corresponding to a NOP in a non-extended instruction set, in the opcode field. In the prefix field, the first instruction has a first prefix value and the second instruction has a second prefix value in the prefix field. The execution circuitry is to perform a first one or more operations related to the first instruction and a second one or more operations related to the second instruction, the first one or more operations including a load operation and the second one or more operations including a store operation.

The use of embodiments may be desirable because it may conserve instruction encoding space and/or minimize code size for memory operations.

As mentioned in the background section, a processor, processor core, execution core, etc. (any of which may be referred to as a core) may execute instructions defined by an ISA. An ISA may include one or more NOPs that may be redefined as one or more new instructions to extend the ISA. However, the number of NOPs may be limited. Therefore, embodiments provide a technique for adding multiple new instructions using the opcode of only one NOP.

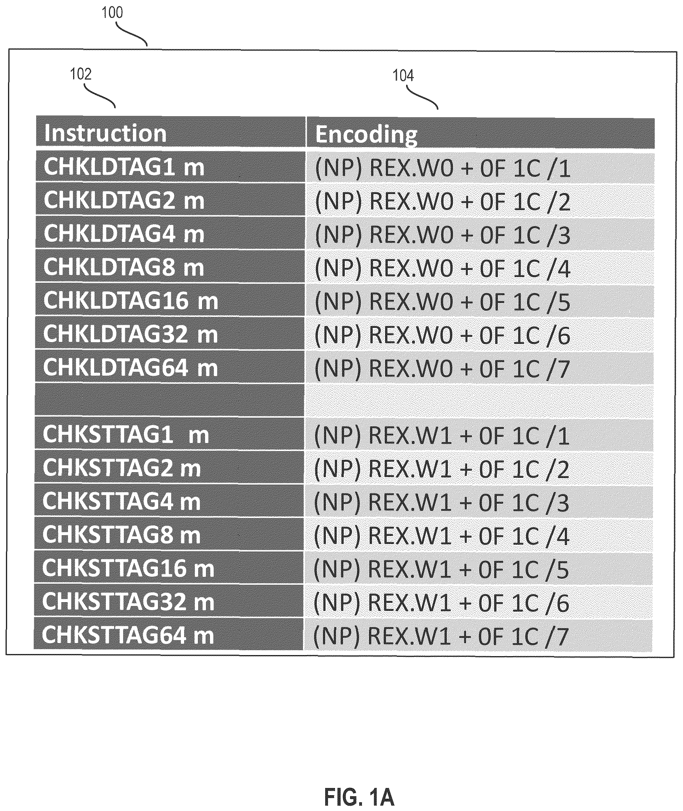

As an example, an embodiment includes using the opcode of one NOP (e.g., 0F 1C) to add two new instructions (e.g., CHKLDTAG and CHKSTTAG, as described below) to the x86 ISA. Furthering this example, the opcode may also be extended (e.g., as described below), to indicate the size of one or more data accesses related to the new instruction. Figure 1A illustrates this example.

Table 100 in Figure 1A shows example encodings for fourteen new instructions, the operation of which is described below. In 'Encoding' column 104, the encodings are indicated according to the Intel^{®} 64 instruction format, which includes an opcode field and may include a REX prefix field and an opcode extension field. All of these instructions use the same two-byte hexadecimal opcode (0F 1C) of a NOP, thus preserving other NOP opcodes for other future instructions.

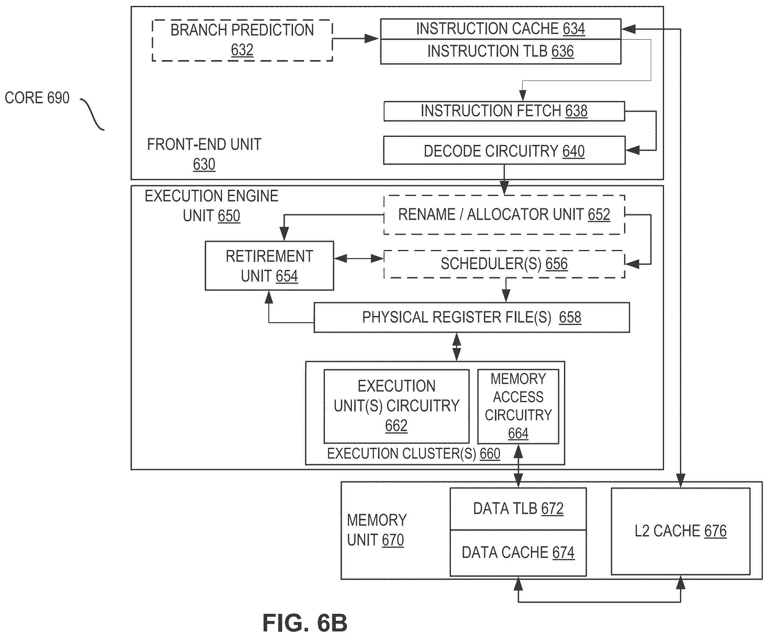

Embodiments may include an instruction decoder (e.g., implemented in any combination of circuitry, hardware, programmable logic array(s), look-up table(s), etc.), such as decode circuitry 640 in Figure 6B, described below.

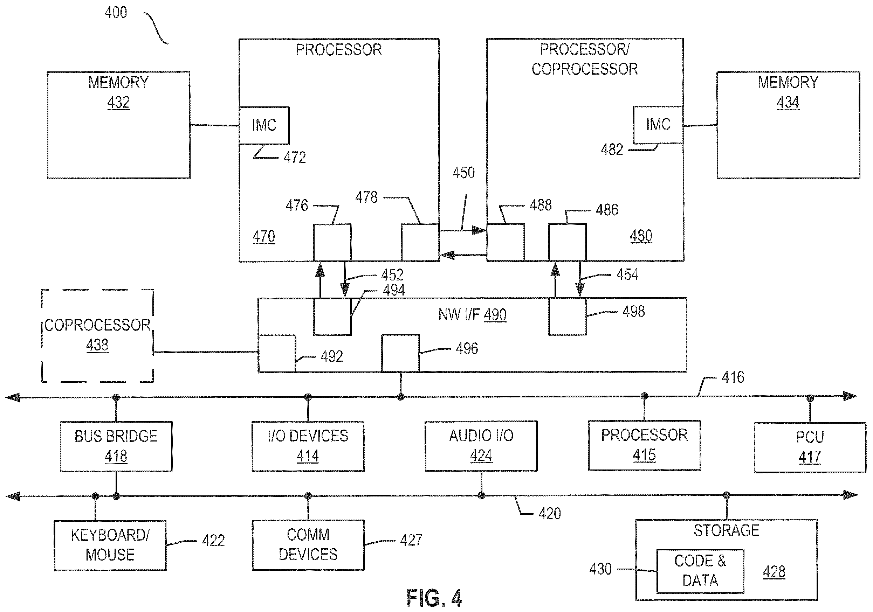

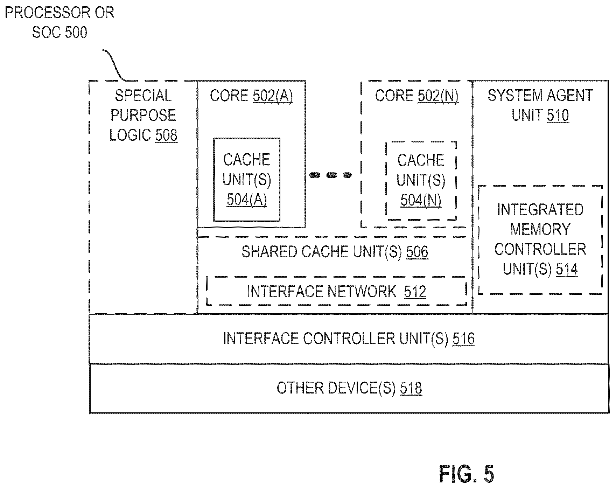

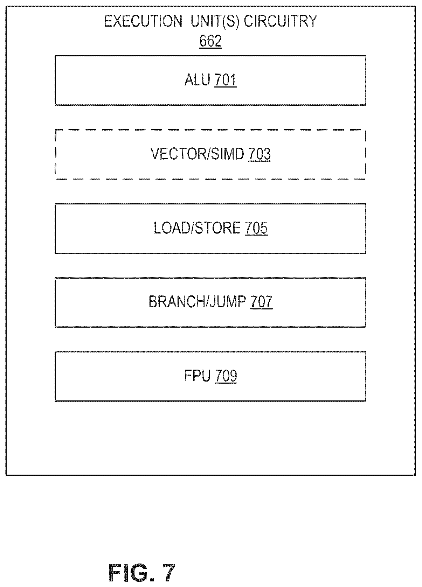

Embodiments may include such an instruction decoder in a processor, processor core, execution core, etc., which may be any type of processor/core, including a general-purpose microprocessor/core, such as a processor/core in the Intel^{®} Core^{®} Processor Family or other processor family from Intel^{®} Corporation or another company, a special purpose processor or microcontroller, or any other device or component in an information processing system in which an embodiment may be implemented (e.g., any of processors 470, 480, or 415 in Figure 4, processor or system-on-a-chip (SoC) 500 or one of cores 502A to 502N in Figure 5, and/or core 690 in Figure 6B, each as described below. The processor, processor core, execution core, etc. may also include one or more execution units (e.g., implemented in any combination of circuitry, hardware, arithmetic-logic units, load-store units, etc.), coupled to the instruction decoder, to perform operations in response to decoded instructions generated by the instruction decoder (e.g., micro-instructions, uops, control signals, etc.), such as any combination of execution engine unit 650, execution cluster(s) 660, execution unit(s) circuitry 662, and/or memory access circuitry 664 in Figure 6B and/or Figure 7, described below.

As shown in column 104, a REX prefix (hexadecimal 40 to 4F) indicates that the two-byte opcode should be decoded as a CHKTAG instruction (as described below), with the W bit of the REX prefix indicating whether the CHKTAG instruction is a CHKLDTAG (e.g., W=0 or REX.WO) or a CHKSTTAG (e.g., W=1 or REX.W1) instruction. Thus, embodiments provide for distinguishing instructions (e.g., CHKTAG instructions for tag checking memory accesses) involving or related to stores from those involving or related to loads, thus supporting modes of operation related to only one of stores or loads (e.g., the ChkTag architecture, described below, supports a mode of operation that checks memory tags for stores but not loads) without allocating entirely separate opcodes.

In embodiments, the more compact REX.WO encoding is used for loads because load instructions may be more numerous than store instructions. Stores that already use the REX X and/or B bits do not suffer any code size increase from the REX.W1 encoding.

Furthermore, the seven CHKLDTAG instructions may be distinguished by an opcode extension (e.g., 1, 2, 3, 4, 5, 6, or 7 in the reg field of the ModR/M byte), as are the seven CHKSTTAG instructions, to indicate the size of the data access(es) (e.g., 1, 2, 4, 8, 16, 32, or 64 bytes, respectively). Accordingly, the mnemonics shown in 'Instruction' column 102 of Figure 1A are CHKLDTAG1, CHKLDTAG2, CHKLDTAG4, CHKLDTAG8, CHKLDTAG16, CHKLDTAG32, and CHKLDTAG64, respectively, and CHKSTTAG1, CHKSTTAG2, CHKSTTAG4, CHKSTTAG8, CHKSTTAG16, CHKSTTAG32, and CHKSTTAG64, respectively, with the 'm' indicating that the instruction formats include a memory operand to indicate the memory location for the data access(es).

Encoding the data access size into the opcode allows these encodings to include no other prefixes (e.g., a hexadecimal 66 prefix to indicate operand size), thus providing for smaller code size. Therefore, column 104 also shows that the encodings use no other prefix (NP).

Various other embodiments are possible, including but not limited to using a bit (e.g., the W bit) in another prefix (e.g., an Intel^{®} Advanced Processor Extensions (APX) REX2 prefix) to distinguish between loads and stores.

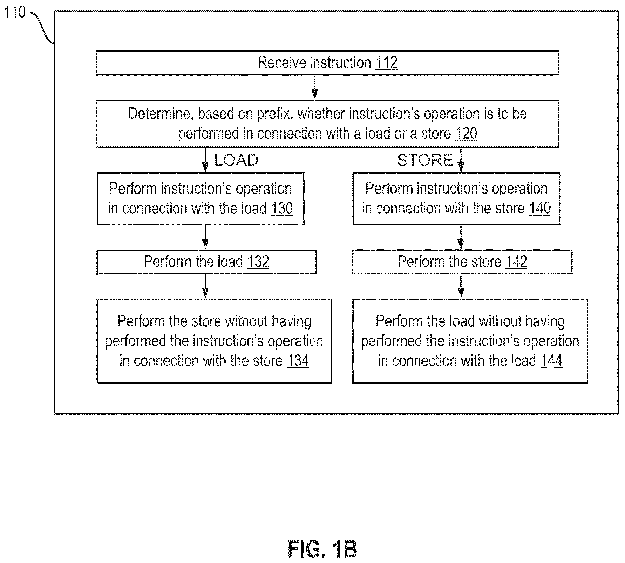

Figure 1B illustrates a method 110 for using prefix bits to distinguish between loads and stores according to embodiments.

In 112, instruction decoder circuitry receives an instruction in an extended instruction set, the instruction having an opcode corresponding to a NOP in a non-extended instruction set. In 120, it is determined, based on a value of one or more instruction prefix bits, whether an operation (e.g., a memory tag checking operation, which may include a memory tag load operation) corresponding to the instruction (e.g., CHKLDTAG or CHKSTTAG) is to be performed in connection with a load operation or a store operation (e.g., a data load or data store operation performed in response to a load or store instruction following the CHKLDTAG or CHKSTTAG instruction, in an address range specified by the CHKLDTAG or CHKSTTAG instruction), and, in embodiments, a data access size may be determined based on an extended opcode of the instruction.

In 130, the operation (e.g., memory tag checking) corresponding to the instruction (e.g., CHKLDTAG) is performed in connection with the load operation (e.g., performed in response to a load instruction following the CHKLDTAG instruction, in an address range specified by the CHKLDTAG instruction). For example, a memory tag check may be performed for an address (or an address range including an address) to be used in the load operation. In 132, the load operation is performed.

In 134, a store operation is performed (e.g., in response to a store instruction) without the operation (e.g., memory tag checking) corresponding to the instruction (e.g., CHKLDTAG) having been performed in connection with the store operation. For example, since the preceding tag checking instruction was for loads (CHKLDTAG) and not for stores, the store operation may be performed in response to a store instruction without a memory tag check for the address used in the store operation.

In 140, the operation (e.g., memory tag checking) corresponding to the instruction (e.g., CHKSTTAG) is performed in connection with the store operation (e.g., performed in response to a load instruction following the CHKSTTAG instruction, in an address range specified by the CHKSTTAG instruction). For example, a memory tag check may be performed for an address (or an address range including an address) to be used in the store operation. In 142, the store operation is performed.

In 144, a load operation is performed (e.g., in response to a load instruction) without the operation (e.g., memory tag checking) corresponding to the instruction (e.g., CHKSTTAG) having been performed in connection with the load operation. For example, since the preceding tag checking instruction was for stores (CHKSTTAG) and not for loads, the load operation may be performed in response to a load instruction without a memory tag check for the address used in the load operation.

As shown by the example of Figure 1A, an embodiment may include a mechanism for determining whether a CHKTAG instruction is a CHKLDTAG instruction or a CHKSTTAG in a memory tagging architecture, an example of which may be referred to as ChkTag. ChkTag includes associating tags with granules of memory and checking that the corresponding tag value is present in the pointer used to access the memory. If the tag in a pointer and the tag associated with the memory location do not match, an exception is generated.

In embodiments, CHKTAG instructions may be inserted by compilers before potentially unsafe memory accesses to detect memory safety programming errors, such as buffer overflows and use-after-free.

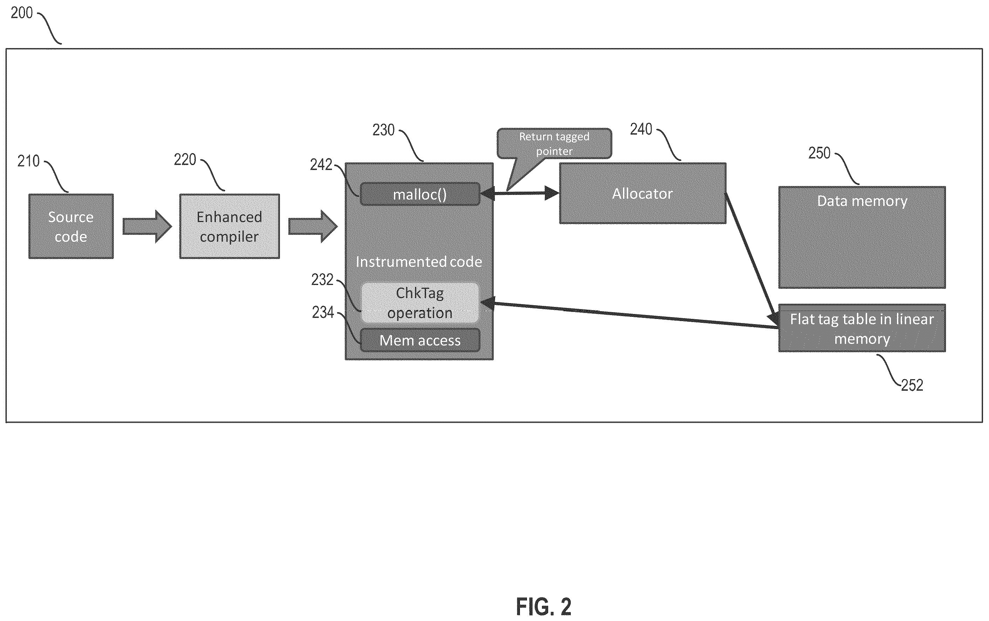

Figure 2 illustrates a block diagram 200 according to an embodiment, including an enhanced compiler 220 to instrument source code 210 with explicit instructions to check memory accesses, as well as memory allocator 240 to allocate (e.g., in response to malloc instruction 242) one or more portions of a memory (e.g., data memory 250) to a program, application, or other software. A memory allocator (e.g., allocator 240) may be implemented within system software (however, embodiments are not limited to software implementations of a memory allocator). In the resulting instrumented code 230, each memory access (e.g., memory access 234) is preceded by a ChkTag operation (e.g., ChkTag operation 232, which may be performed in response to a CHKTAG instruction inserted before a memory access instruction), in which a tag in a pointer associated with the memory access operation is compared to a stored tag (e.g., in flat tag table 252 in linear memory) associated with the corresponding memory location (e.g., in flat tag table 252 in linear memory).

A CHKTAG instruction may specify an access range within which tags in pointers are to be compared to tags associated with the corresponding memory locations. The access range may be specified by a memory operand in the CHKTAG instruction (e.g., the base register specifies the first byte of the access range and the effective address specifies the last byte of the access range).

Embodiments may include multiple types of CHKTAG instructions, for example, a CHKLDTAG instruction to provide for tag checking for load operations and a CHKSTTAG instruction to provide for tag checking for store operations, such that different tag checking modes may be supported (e.g., check loads and stores, check stores but not loads, etc.). In embodiments, read-modify-write operations may be treated as stores (e.g., perform check(s) preceding read-modify-write data accesses in response to CHKSTTAG instruction(s)). Additional variants of CHKTAG instructions may be defined with the intent of compilers associating each variant with a different category of instructions, e.g., read-modify-write instructions, floating point instructions, etc., with enabling for each variant controlled based on a combination of enable bits.

In embodiments, instruction encoding choices may be based on factors such as the frequency of corresponding instructions and/or operations. For example, tag checking for loads may be assigned the more compact REX.WO encoding because load instructions may be more numerous than store instructions.

Various embodiments may include associating other operations, instead of or in addition to tag checking, with types of data accesses (e.g., loads, stores) distinguished with one or more instruction prefix bits.

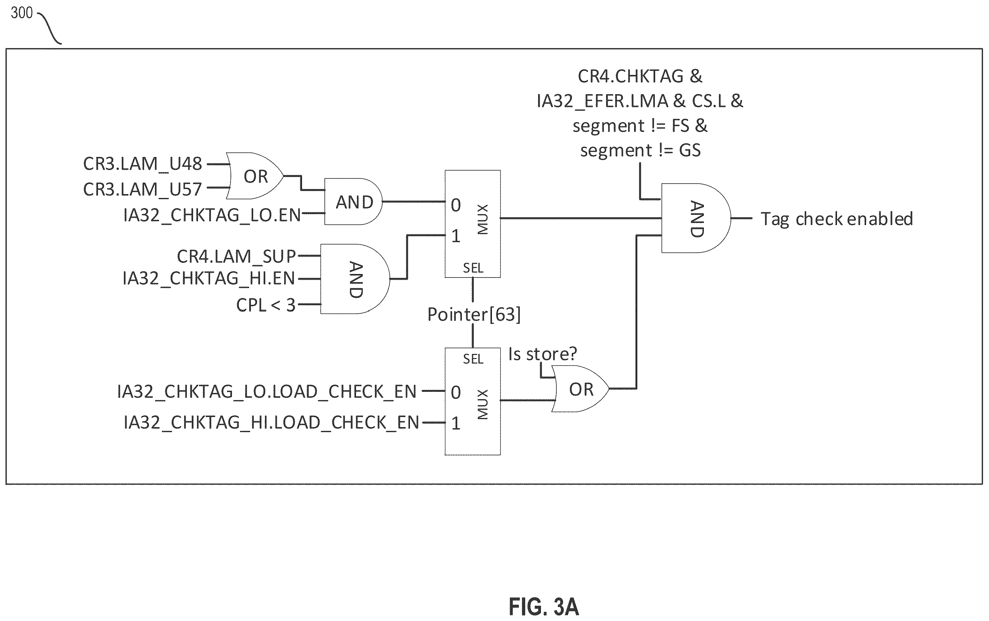

Various embodiments may include various implementations for enabling operations (e.g., tag checking) to be performed in response to decoded (or partially decoded) instructions. For example, the enabling state for CHKTAG instructions may be determined using a circuit such as enable circuit 300 shown in Figure 3A, which allows discarding instructions in the front-end (e.g., front-end unit 630 in Figure 6B, described below) that may be deemed as unneeded independent of the value of the corresponding memory address, without consuming additional pipeline resources.

The following signals (which may be defined within an x86 ISA, a Linear Address Masking (LAM) architecture, and/or a ChkTag architecture, and/or may be programmed into a model-specific register (MSR) or control register (e.g., CR3, CR4)) involved in controlling enable circuit 300 are shown in Figure 3A.
- CR3.LAM_U48 (user LAM48 enable bit in CR3, involved in masking of linear address bits 62:48 for user pointers)
- CR3.LAM_U57 (user LAM57 enable bit in CR3, involved in masking of linear address bits 62:57 for user pointers)
- IA32_CHKTAG_LO.EN (ChkTag enable bit in IA32_CHKTAG_LO MSR, involved in controlling tag checking for loads and stores referencing low addresses)
- CR4.LAM_SUP (supervisor LAM enable bit in CR4, involved in masking for supervisor pointers)
- IA32_CHKTAG_HI.EN (ChkTag enable bit in IA32_CHKTAG_HI MSR, involved in controlling tag checking for loads and stores referencing high addresses)
- CPL (current privilege level)
- IA32_CHKTAG_LO.LOAD_CHECK_EN (load ChkTag enable bit in IA32_CHKTAG_LO MSR, involved in controlling tag checking for loads referencing low addresses)
- IA32_CHKTAG_HI.LOAD_CHECK_EN (load ChkTag enable bit in IA32_CHKTAG_HI MSR, involved in controlling tag checking for loads referencing high addresses)
- CR4.CHKTAG (overall ChkTag enable bit in CR4)
- IA32_EFER.LMA (bit in extended feature enable MSR (EFER), involved in indicating whether IA-32e mode is active)
- CS.L (code segment descriptor bit involved in determining sub-mode operation in IA-32e mode)
- Segment (independent address space that may be associated with the address for the data access, e.g., CS (code segment), DS (data segment), SS (stack segment) ES (data segment), FS (data segment), GS (data segment))
- Pointer[63] (bit 63 of pointer for data access operation)
- Is store? (is the data access a store)

For example, consider the following configuration values:
- CR3.LAM_U48 = 0
- CR3.LAM_U57 = 0
- IA32_CHKTAG_LO.EN = 0
- CR4.LAM_SUP = 1
- IA32_CHKTAG_HI.EN = 1
- CPL = 3
- IA32_CHKTAG_LO.LOAD_CHECK_EN = 0
- IA32_CHKTAG_HI.LOAD_CHECK_EN = 1
- CR4.CHKTAG = 1
- IA32_EFER.LMA = 1
- CS.L = 1
- Segment = DS
- It is a store that is being checked

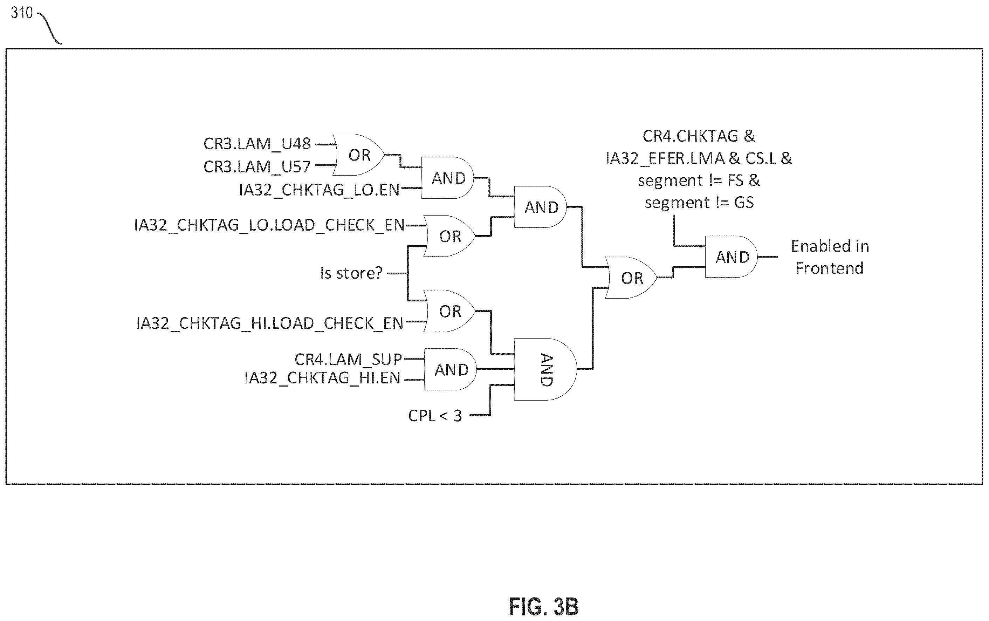

Even though many portions of the enabling circuit (e.g., enable circuit 300) would compute a high value, the ultimate result of the circuit will indicate that the tag check is unneeded, even without knowing the value of the pointer. Therefore, embodiments may allow the front-end (e.g., front-end unit 630 in Figure 6B, described below) of the processor to avoid consuming any additional pipeline resources. Figure 3B shows an example of decision logic 310 in the front-end for enabling checks.

In embodiments, the division of enable bits into different types of registers described above may be desirable.

For example, usages may include toggling IA32_CHKTAG_LO/HI.EN bits and/or IA32_CHKTAG_LO/HI.LOAD_CHECK_EN bits.
- Toggling between a first mode for checking loads and stores and a second mode for checking only stores to modulate overheads may benefit from updating *.LOAD_CHECK_EN quickly to reduce overheads.
- Toggling between a second mode for checking only stores and a third mode for no checking to modulate overheads may benefit from updating *.EN quickly to reduce overheads.

As another example, enable bits described above may be placed in MSRs to reduce overheads of updating them. The potential alternative of placing enable bits in CR3 or CR4 registers would be slower, since CR3 and CR4 updates may be longer, serializing operations.

As another example, conditioning IA32_CHKTAG_LO.EN on LAM _U48/U57 also avoids the need for updating IA32_CHKTAG_LO when switching between tagged and untagged processes, assuming a matching tag table base, ChkTag EN, and LOAD_CHECK_EN across LAM processes. If that is not the case, additional register updates may be needed.

As another example, an enable bit architecture similar to that shown above may also help to speed up virtual machine monitor (VMM) emulation for ChkTag.
- A VMM emulating a guest memory access or tag check already inspects guest CR3 during a guest page walk.
- Determining low address (i.e., with Pointer[63] == 0) ChkTag enabling adds no cost when LAM is disabled (just additionally read guest IA32_CHKTAG_LO when LAM_U48/U57 is enabled).
- VMM may conclude when high address (i.e., with Pointer[63] == 1) checking is disabled based on guest CR4.LAM_SUP being disabled (just additionally read guest IA32_CHKTAG_HI when LAM_SUP is enabled).

Embodiments may include other enable bit architectures to provide similar benefits as those described above.

### Example apparatuses, methods, etc.

According to some examples, an apparatus (e.g., a hardware processor, processor core, execution core, etc.) includes instruction decoder and execution circuitry. The instruction decoder circuitry is to decode an extended instruction set including a first and a second instruction. The first and second instructions have a format including an opcode field and a prefix field, and both have a first opcode value, corresponding to a NOP in a non-extended instruction set, in the opcode field. In the prefix field, the first instruction has a first prefix value and the second instruction has a second prefix value in the prefix field. The execution circuitry is to perform a first one or more operations related to the first instruction and a second one or more operations related to the second instruction, the first one or more operations including a load operation and the second one or more operations including a store operation.

Any such examples may include any or any combination of the following aspects. The first one or more operations and the second one or more operations include a tag checking operation. The first one or more operations include a tag checking operation for a memory location accessed in connection with the load operation. The second one or more operations include a tag checking operation for a memory location accessed in connection with the store operation. The format also includes an extended opcode field and a size value in the extended opcode field is to indicate a data access size. The prefix field is a REX prefix field according to an x86 instruction set architecture. The first prefix value and the second prefix value are in a W bit of the REX prefix field. The apparatus also includes enable circuitry to enable the tag checking operation based in part on the first prefix value or the second prefix value. The apparatus also includes storage to store one or more tag checking configuration values, wherein the enable circuitry is to enable the tag checking operation also based in part on the one or more tag checking configuration values.

According to some examples, a method includes receiving, by instruction decoder circuitry of a hardware processor, an instruction in an extended instruction set, the instruction having an opcode corresponding to a NOP in a non-extended instruction set; determining, based on one or more instruction prefix bits, whether an operation corresponding to the instruction is to be performed in connection with a load operation or a store operation; and performing the operation corresponding to the instruction.

Any such examples may include any or any combination of the following aspects. The operation corresponding to the instruction is a memory tag checking operation. Performing the operation corresponding to the instruction is performed in response to determining that the operation corresponding to the instruction is to be performed in connection with the load operation, further comprising performing the load operation. Performing the operation corresponding to the instruction includes performing a memory tag checking operation for an address to be used in the load operation. Performing the operation corresponding to the instruction is performed in response to determining that the operation corresponding to the instruction is to be performed in connection with the store operation, further comprising performing the store operation. Performing the operation corresponding to the instruction includes performing a memory tag checking operation for an address to be used in the store operation. The method also includes determining a data access size based on an extended opcode of the instruction.

According to some examples, a non-transitory machine-readable medium storing instructions in an extended instruction set, including an instruction having an opcode corresponding to a NOP in a non-extended instruction set, which, when decoded by a machine, causes the machine to perform a method including determining, based on one or more instruction prefix bits, whether an operation corresponding to the instruction is to be performed in connection with a load operation or a store operation; and performing the operation corresponding to the instruction.

Any such examples may include any or any combination of the following aspects. The operation corresponding to the instruction is a memory tag checking operation. Performing the operation corresponding to the instruction is performed in response to determining that the operation corresponding to the instruction is to be performed in connection with the load operation, further comprising performing the load operation. Performing the operation corresponding to the instruction includes performing a memory tag checking operation for an address to be used in the load operation. Performing the operation corresponding to the instruction is performed in response to determining that the operation corresponding to the instruction is to be performed in connection with the store operation, further comprising performing the store operation. Performing the operation corresponding to the instruction includes performing a memory tag checking operation for an address to be used in the store operation. The method also includes determining a data access size based on an extended opcode of the instruction.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when decoded and/or executed by a machine causes the machine to perform any method or portion of a method disclosed herein. Embodiments may include any details, features, etc. or combinations of details, features, etc. described in this specification.

### Example Computer Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, the first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller unit circuitry 516 couples the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram.

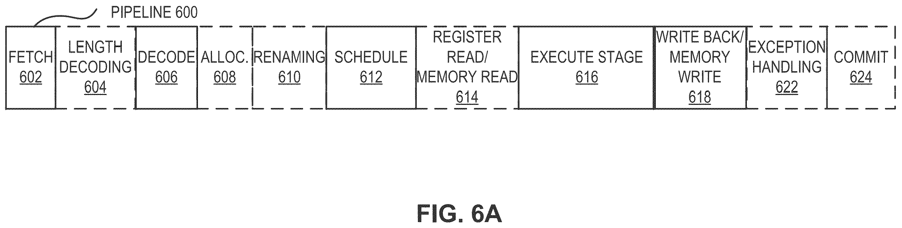

FIG. 6A is a block diagram illustrating both an example in-order pipeline and an example register renaming, out-of-order issue/execution pipeline according to examples. FIG. 6B is a block diagram illustrating both an example in-order architecture core and an example register renaming, out-of-order issue/execution architecture core to be included in a processor according to examples. The solid lined boxes in FIGS. 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6A, a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6B may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6B shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry.

FIG. 7 illustrates examples of execution unit(s) circuitry, such as execution unit(s) circuitry 662 of FIG. 6B. As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors, and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

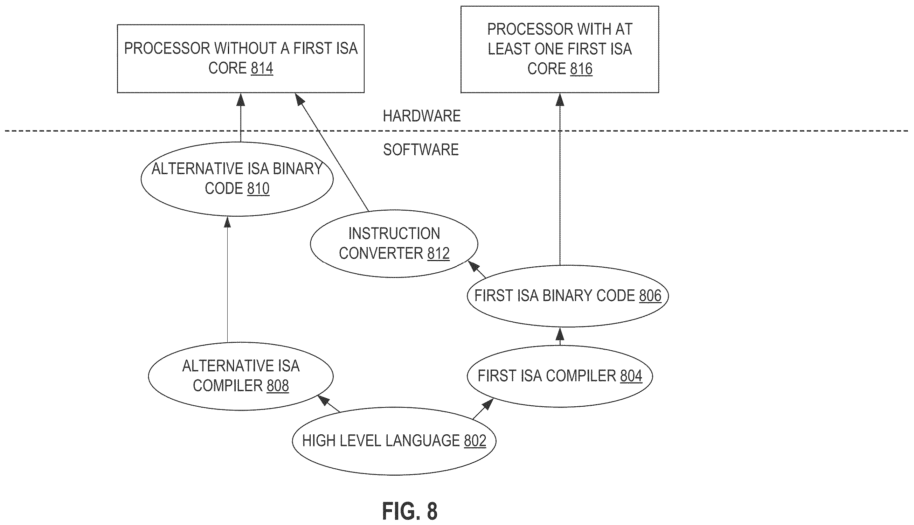

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases do not necessarily refer to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
instruction decoder circuitry to decode an extended instruction set including a first instruction and a second instruction, the first instruction and the second instruction having a format including an opcode field and a prefix field, the first instruction having a first opcode value in the opcode field and a first prefix value in the prefix field, the second instruction having the first opcode value in the opcode field and a second prefix value in the prefix field, wherein the first opcode value corresponds to a no-operation instruction in a non-extended instruction set; and
execution circuitry coupled to the instruction decoder circuitry, the execution circuitry to perform a first one or more operations related to the first instruction and a second one or more operations related to the second instruction, the first one or more operations including a load operation and the second one or more operations including a store operation.

2. The apparatus of claim 1, wherein the first one or more operations and the second one or more operations include a tag checking operation.

3. The apparatus of claim 1 or 2, wherein the first one or more operations include a tag checking operation for a memory location accessed in connection with the load operation; or wherein the second one or more operations include a tag checking operation for a memory location accessed in connection with the store operation.

4. The apparatus of any of claims 1-3, wherein the format also includes an extended opcode field and a size value in the extended opcode field is to indicate a data access size.

5. The apparatus of any of claims 1-4, wherein the prefix field is a REX prefix field according to an x86 instruction set architecture, wherein optionally the first prefix value and the second prefix value are in a W bit of the REX prefix field.

6. The apparatus of any of claims 2-5, further comprising enable circuitry to enable the tag checking operation based in part on the first prefix value or the second prefix value.

7. The apparatus of claim 6, further comprising storage to store one or more tag checking configuration values, wherein the enable circuitry is to enable the tag checking operation also based in part on the one or more tag checking configuration values.

8. A method comprising:
receiving, by instruction decoder circuitry of a hardware processor, an instruction in an extended instruction set, the instruction having an opcode corresponding to a NOP in a non-extended instruction set;
determining, based on one or more instruction prefix bits, whether an operation corresponding to the instruction is to be performed in connection with a load operation or a store operation; and
performing the operation corresponding to the instruction.

9. The method of claim 8, wherein the operation corresponding to the instruction is a memory tag checking operation.

10. The method of claim 8 or 9, wherein performing the operation corresponding to the instruction is performed in response to determining that the operation corresponding to the instruction is to be performed in connection with the load operation, further comprising performing the load operation, wherein optionally performing the operation corresponding to the instruction includes performing a memory tag checking operation for an address to be used in the load operation.

11. The method of claim 8 or 9, wherein performing the operation corresponding to the instruction is performed in response to determining that the operation corresponding to the instruction is to be performed in connection with the store operation, further comprising performing the store operation, wherein optionally performing the operation corresponding to the instruction includes performing a memory tag checking operation for an address to be used in the store operation.

12. The method of any of claims 8-11, further comprising determining a data access size based on an extended opcode of the instruction.

13. A non-transitory machine-readable medium storing instructions in an extended instruction set, including an instruction having an opcode corresponding to a NOP in a non-extended instruction set, which, when decoded by a machine, causes the machine to perform a method comprising:
determining, based on one or more instruction prefix bits, whether an operation corresponding to the instruction is to be performed in connection with a load operation or a store operation; and
performing the operation corresponding to the instruction.

14. The non-transitory machine-readable medium of claim 13, wherein the operation corresponding to the instruction is a memory tag checking operation.

15. The non-transitory machine-readable medium of claim 13 or 14, wherein performing the operation corresponding to the instruction is performed in response to determining that the operation corresponding to the instruction is to be performed in connection with the load operation, further comprising performing the load operation or, wherein performing the operation corresponding to the instruction is performed in response to determining that the operation corresponding to the instruction is to be performed in connection with the store operation, further comprising performing the store operation.
